# EUROPEAN PATENT SPECIFICATION

(11) **EP 2 487 077 B1**
(45) Date of publication and mention of the grant of the patent: **12.08.2020**
(21) Application number: 12155371.3
(22) Date of filing: 14.02.2012
(51) Int. Cl.: B60S 3/06

(54) **Car wash facility**
Autowascheinrichtung
Installation de lavage de voiture

(30) Priority: 14.02.2011 DK 201170086
(43) Date of publication of application: 15.08.2012
(73) Proprietor: Istobal S.A., 46250 L'Alcúdia (Valencia) (ES)
(72) Inventor: Mogensen, Kim Secher, 8800 Viborg (DK)
(74) Representative: Ungria López, Javier

(56) References cited:
- EP-A2- 0 407 695
- EP-A2- 2 163 443
- GB-A- 1 181 441
- US-A1- 2008 034 517

## Description

### Field of the invention

The present invention concerns a car wash facility with a washing area of the type where a vehicle is positioned centrally in a wash area, where the car wash facility includes a washing machine in the form of a movable portal which includes a first and a second leg and a bearer, where along each of the legs there is arranged at least one rotatable and movable vertical brush called a side brush, and where along the bearer is arranged at least one rotatable and movable horizontal brush called a top brush, where the portal is moved in longitudinal direction of the positioned vehicle, and where the side brushes are adapted with means for transverse movement on a crossbar relative to the direction of movement of the portal.

### Description of prior art

It is commonly known to wash cars by machine in a so-called carwash. The car is placed in the carwash and a washing machine, which is often constituted by a portal with vertical rotating brushes at the sides, called side brushes, and a horizontal rotating brush, called a top brush. The portal runs on rails in the floor and works in longitudinal direction of the car while brushes and spray nozzles clean the car. Usually, a subsequent drying is effected by air blown on the wet car by one or more air nozzles whereby water on the surface of the car is removed.

At the washing machine itself there are various kinds of sensors for controlling and regulating the brush pressure on the car and the spacing between air nozzles and the surface of the car. These parameters are essential to the achieved result. The brush pressure against the car is very important as the paintwork of the car is to be considered and the service life of the brushes is dependent on the contact pressure of the brushes as well. The service life of the paintwork on the car as well as of the brushes are shortened appreciably by too high contact pressure. By too low contact pressure, the wanted washing effect is not achieved.

In order to achieve an even better result than a usual was, washing with the side brushes and top brushes can be performed more than once. However, there is the inexpediency that it takes longer time whereby the capacity of the washing machine obviously is reduced, which often appears to be inexpedient as a long queue thus can arise in front of the washing machine, and customers will in some cases look for another washing machine.

These inexpediencies may, however, in part be counteracted by the prior art washing machines. The company WashTec offers a washing machine which is constructed with two horizontal brushes and one vertical brush at each side. This machine is in principle constructed as a double portal corresponding to two or more identical portals facing each other, where on each of the two portals one horizontal brush is arranged while side brushes are arranged on only one of the portals. By such a machine it is thus possible with enhanced cleaning of the upwardly facing surface of a car. In order to achieve a better washing result on the sides of a car, it is still necessary to wash twice or to lower the speed at which the portals are moved back and/or forth. All things considered, a lower washing speed as well as an extra wash will give a longer processing time which is unwanted.

Such a washing machine with double portal furthermore requires increased length of the rails on which the washing machine runs in order to have the same efficient washing length. This is only due to the fact that an extra portal forms part of the solution, and that this portal takes up the same space as the first portal. Such a machine hereby becomes about double as long as a traditional washing machine with two side brushes and with one top brush, thereby demanding more space in front of a car and behind a car. The increased length of the machine implies that such a machine cannot immediately be installed in an existing carwash, or that a new carwash is to be built longer than a traditional carwash.

Another possibility among the washing machines already on the market is from the company Istobal that markets a washing machine with the name M18+, having four side brushes and a single top brush. This washing machine is also constructed of two traditional washing machines which are built together into one unit, and which therefore has twice the length. This variant has the same drawbacks as the above mentioned model. It requires more space in front of as well as behind the car being washed. The advantage of this washing machine compared with the above mentioned washing machine is that there are two side brushes at each side. This is an evident advantage as it is often the sides of the car that require most cleaning, whereas the upwardly facing surfaces very well can be cleaned by a single top brush. However, as mentioned there is need for more space which is often impossible when a washing machine in an existing carwash is replaced by a new and more efficient model.

Moreover, a solution with two portals are known from GB 2 190 341 A where the same conditions exist with regard to space demands as mentioned above.

Document EP 2163443 A2 additionally discloses a portal washing system for motor vehicles, comprising: a portal frame movable relative to the motor vehicle to be washed; at least one lateral washing brush; and at least one lateral high-pressure water nozzle device attached to the portal frame, where the at least one high pressure side water jet device is mounted in front of the portal frame in the forward direction of travel of the portal frame, wherein the at least one lateral high-pressure water nozzle device has a housing extending in a vertical direction relative to the portal frame, which is arranged slightly above the floor surface to be traversed by the gantry washing installation and via a horizontal web provided in the floor area. with the portal frame is firmly connected, and at least one oscillating high-pressure spot jet nozzle.

### Object of the invention

It is thus the object of the invention to indicate a washing machine of the kind mentioned in the introduction where it is possible to have more side brushes, and where so much space is not required in front of and behind the cars to be washed as by the above mentioned solutions. At the same time, it is the purpose to indicate a modular washing machine which readily can be adapted for a greater or lesser need.

### Description of the invention

As mentioned in the introduction, the invention concerns a car wash facility including a washing machine in the form of a movable portal constituted by a first and a second leg and a bearer, where along each of the legs there is arranged at least one side brush, and where along the bearer is arranged at least one top brush. The portal is arranged to move in longitudinal direction of the positioned vehicle, and the side brushes are adapted with means for transverse movement on a crossbar relative to the direction of movement of the portal.

The new feature of a washing machine according to the invention is that the portal is adapted with a crossbar module including a crossbar extending from an area at a first leg and to an area at a second leg, where the crossbar module includes at least one transverse part on which one or more additional side brushes are arranged rotatable and movable in longitudinal direction of the crossbar. By mounting an additional crossbar module there is achieved possibility of having two side brushes at each side of the portal without which it becomes appreciably longer and thus takes up more of the available space. The crossbar module is thus mounted directly on the existing portal. The portal itself therefore is not increased in length, and the rails on the floor on which the portal runs is not to be longer. It is thus possible to adapt an existing washing machine with two side brushes and with one top brush so that it is fitted with two side brushes in addition and thereby a considerably increased capacity as a wash can be performed with increased speed. This is an advantage which is due to the additional crossbar module with extra side brushes. A washing machine may thus readily be adapted to an actual need for an increased capacity which can be effected without further changes in connection with the washing area, and without the maximum length of the vehicles to be washed being reduced appreciably.

In a preferred variant of a carwash according to the invention, the crossbar module extends from one leg to another leg on a washing machine, where the crossbar module is U-shaped and includes a transverse part and two longitudinal parts, where the two longitudinal parts are fixed to coupling means on the two legs of the washing machine. It is thus about a relatively simple design which only includes the necessary technical measures required for performing a wash at the sides of a vehicle. Respective side brushes are suitably arranged with a motor ensuring rotation of the side brush in one or two directions, and with a further motor used for moving the side brush from a position spaced apart from the vehicle and to a given contact with the vehicle to be washed. As mentioned previously, it is a crossbar module which readily can be mounted on an existing facility. Another possibility is that already before mounting a new facility, it has been decided if the facility is to be provided with two or with four side brushes, after which the facility is built to the desired variant. A crossbar module may, as mentioned, be U-shaped corresponding to an open frame but can readily be constructed on a closed frame and thus constitute e.g. a four-sided frame.

In a particularly preferred variant of a car wash facility according to the invention, the movable portal can advantageously be fitted with a crossbar module at both sides of the portal. These crossbar modules can advantageously be made identical whereby a modular washing facility is achieved. There are obviously advantages by such design as the various parts are identical and the number of different parts, spare parts and wearing parts are significantly minimised thereby. Hereby is achieved markedly better logistics in connection with spare parts and wearing parts but in addition is also achieved a smaller production cost and thereby possibility of a lower sales price.

On a variant of a car wash facility according to the invention, the portal can include fixing means for a crossbar module as well as coupling means for at least electricity and compressed air for the crossbar module. These fixing means may advantageously be arranged on the legs of the portal or on a construction part connected with the legs. In a simple embodiment, the fixing means can be constituted by a number of pre-bored bolt holes corresponding to similar bolt holes in a mounting flange or the like on a crossbar module. It is thus possible by appropriate bolts to join the crossbar module with the portal. Other kinds of mounting can also be used, including welding or coupling by other mechanical means.

Furthermore, a crossbar module is to be supplied with electricity and compressed air which are used for driving the motors used in connection with the motors driving the side brushes on the crossbar module. Electric and compressed air connections can be provided by suitable coupling means adapted for the purpose but may also be provided by more direct coupling to the already existing supply installations.

By the invention is achieved the obvious advantage that a car wash facility can be adapted to an increased demand as the capacity can be increased by mounting a crossbar module. Installing this extra crossbar module does not require any kind of reconstruction of the facility and the same washing area can be used, and in most situations the same washing length can be maintained. It is so that increased capacity is achieved by the same washing machine where only a more or less simple mounting of a crossbar module is performed. At the same time, the processing time is generally shorter compared with the prior art as the length a portal according to the invention is to cover is shorter than the length the prior art machines are to cover.

### Short description of the drawing

The invention is described in more detail with reference to the drawing, wherein:
Fig. 1 : shows an example of the prior art as seen from the side;
Fig. 2 : shows a washing facility as seen from the side;
Fig. 3 : shows a washing facility as seen from above;
Fig. 4 : shows a washing facility from the side where a crossbar module is under assembly;
Fig. 5 : shows a washing facility from above where a crossbar module is under assembly;
Fig. 6 : shows a washing facility according to the invention compared with a washing facility according to the prior art.

In the explanation of the Figures, identical or corresponding elements will be provided with the same designations in different Figures. Therefore, no explanation of all details will be given in connection with each single Figure/embodiment.

### Detailed description of the invention

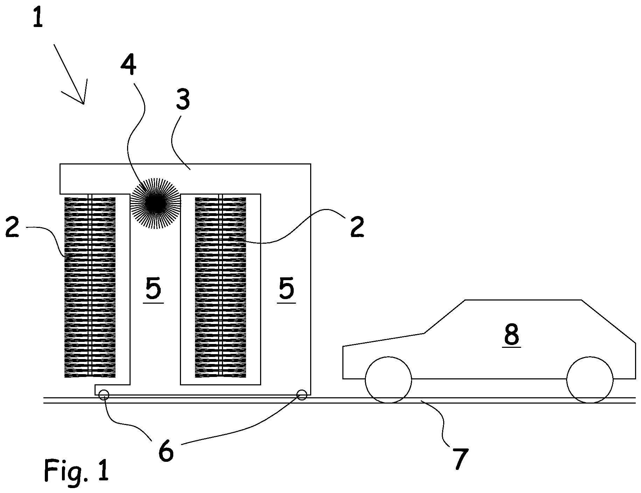

In Fig. 1 appears an example of a car wash facility 1 with an appearance such facilities 1 have had until now when two side brushes 2 are provided at each side of the portal 3 of the facility and one top brush 4. In this embodiment, the portal 3 consists of two legs 5 at each side. The portal 3 is provided with wheels 6 that preferably run on a kind of rails 7 on or in the floor in a washing area. A car 8 is seen in front of the car wash facility 1.

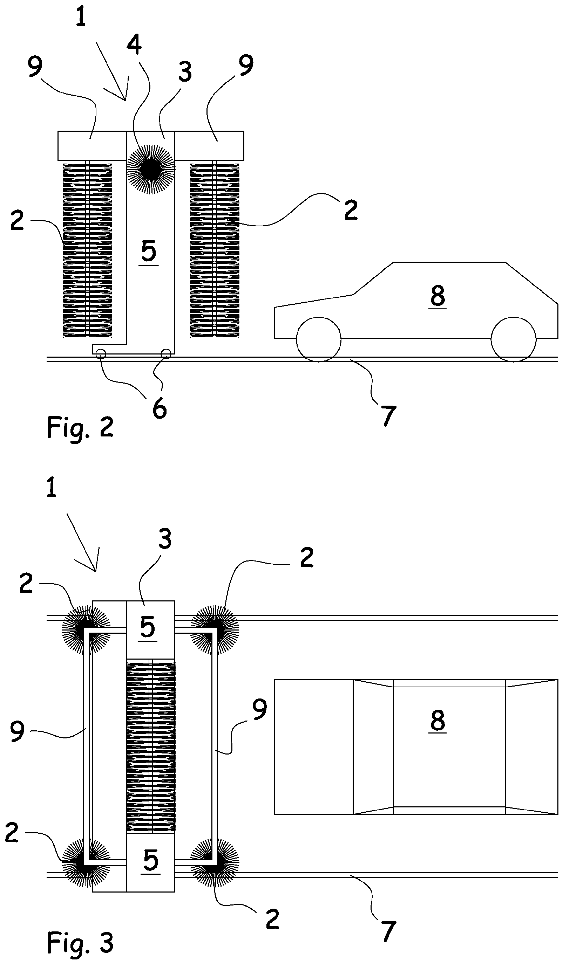

In Fig. 2 appears a car wash facility 1 according to the invention, as seen from the side, where there are two side brushes 2 at each side of the facility 1 and where there is a top brush 4. The portal 3 itself only includes one leg 5 at each side of the portal 3 whereby the total length of the car wash facility 1 is minimised in relation to the prior art as shown in Fig. 1 . The space which the portal 3 takes up in longitudinal direction of the rails 7 is significantly smaller than by the variant of a car wash facility 1 shown in Fig. 1 . A crossbar module 9 is arranged at both sides of the portal 3 at the upper part of the portal 3. In the shown variant, the crossbar modules 9 each include two side brushes 2, which clearly appears from Fig. 3 showing the car wash facility 1 from above.

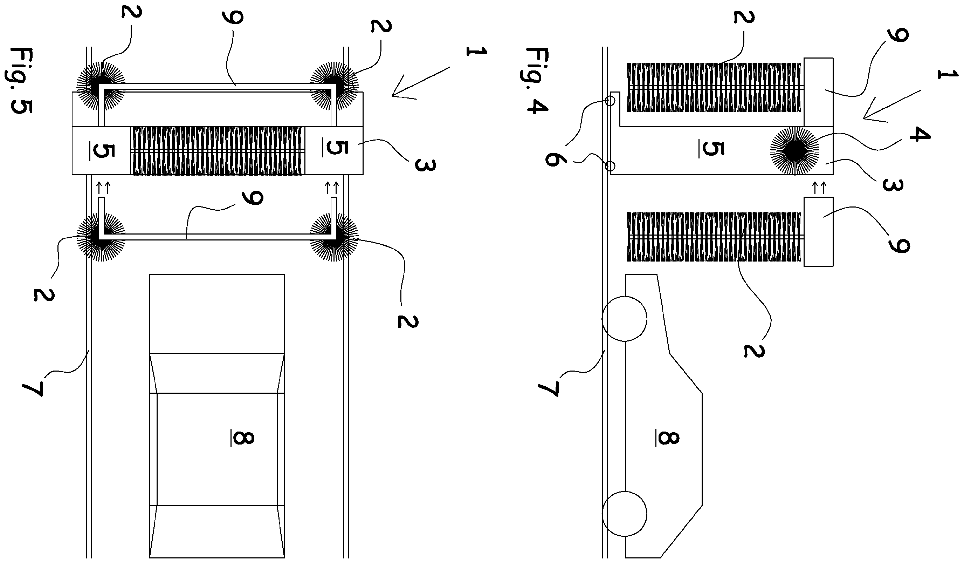

Figs. 4 and 5 show generally the same as Figs. 2 and 3 , but here is shown how a crossbar module 9 can be mounted on a portal 3. By designing the crossbar module 9 in this way, a car wash facility 1 can be changed right away according to need. A crossbar module can be installed or uninstalled according to need without any kind of inference with other parts of the construction of the car wash facility.

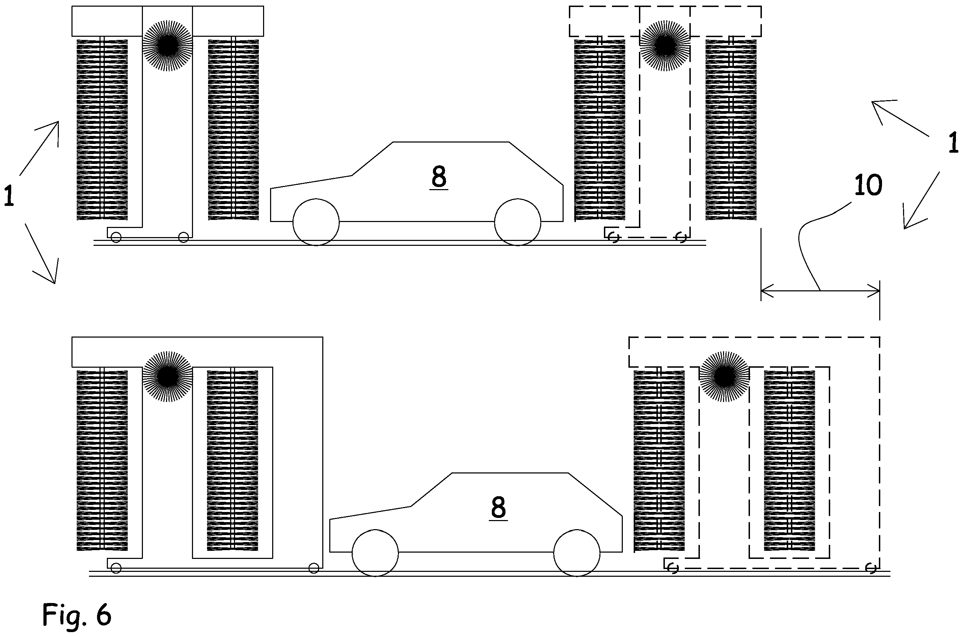

In Fig. 6 appears a direct comparison between a prior art car wash facility 1 and a car wash facility 1 according to the invention. In the upper part of the Figure appears the new variant while the old variant is seen in the lower part of the Figure. In both views are shown a car wash facility 1 in front of the car 8 and again with broken lines behind the car 8. Thus it will clearly appear from Fig. 6 that by the invention is saved some space corresponding to the distance 10 which is shown by an arrow. This space saving is very important as an already existing carwash can be equipped with a car wash facility 1 according to the invention without producing a less active washing area. Alternatively, it will no longer be possible to perform washing of cars with a certain length which obviously is no alternative. By the invention is thereby solved a real problem which clearly appears from Fig. 6 . Such car wash facilities 1 are often built within a closed room and the space available is highly optimised as space is often scarce. By a car wash facility 1 according to the invention, this problem is immediately solved and it is not necessary to perform rebuilding of any kind. The car wash facility 1 becomes more efficient, more customers can get their vehicle washed in the same time and thereby there is a basis for a larger revenue for the owner of the car wash facility 1; however, the most important fact is that it is not necessary to reduce the washing length or to rebuild. The comparison in Fig. 6 also reveals that the travelled distances of the two car wash facilities 1 are different, much influencing the time it takes to perform a wash. The shorter the distance a car wash machine 1 is to run on the rails 7, the shorter the processing time of a wash becomes, which is very significant for customer satisfaction and for the capacity of a car wash facility 1.

## Claims

1. A car wash facility (1) with a washing area of the type where a vehicle (8) is positioned centrally in a wash area, where the car wash facility (1) includes a washing machine in the form of a movable portal (3) which includes a first and a second leg (5) and a bearer, where along each of the legs (5) there is arranged at least one rotatable and movable vertical brush (2) called a side brush (2), and where along the bearer is arranged at least one rotatable and movable horizontal brush (4) called a top brush (4), where the portal (3) is configured to be moved in longitudinal direction of the positioned vehicle (8), where the side brushes (2) are adapted with means for transverse movement on a crossbar relative to the direction of movement of the portal, where the portal (3) is adapted with a crossbar module (9) including a crossbar extending from an area at a first leg (5) to an area at a second leg (5), and where the crossbar module (9) at least includes a transverse part upon which one or more additional side brushes (2) are arranged rotatable and movable in longitudinal direction of the crossbar, the car wash facility (1) being **characterized in that** an additional crossbar module (9) can be installed or uninstalled on the portal (3) according to need.

2. A car wash facility (1) according to claim 1, **characterized in that** the crossbar module (9) is U-shaped and includes a transverse part and two longitudinal parts, where the two longitudinal parts are fixed to coupling means on the two legs (5) of the washing machine.

3. A car wash facility (1) according to any of claims 1 and 2, **characterized in that** the movable portal (3) is fitted with a crossbar module (9) at both sides of the portal (3).

4. A car wash facility (1) according to any of claims 1 to 3, **characterized in that** the portal (3) includes fixing means for a crossbar module (9) as well as coupling means at least for electricity and compressed air for the crossbar module (9).

## Patentansprüche

1. Autowaschanlage (1) mit einem Waschbereich des Typs, bei dem ein Fahrzeug (8) mittig in einem Waschbereich positioniert wird, wobei die Autowaschanlage (1) eine Wascheinrichtung in Form eines beweglichen Portals (3) umfasst, das eine erste und eine zweite Stütze (5) sowie einen Träger enthält, wobei entlang jeder der Stützen (5) wenigstens eine drehbare und bewegliche vertikale Bürste (2) angeordnet ist, die als eine Seitenbürste (2) bezeichnet wird, und entlang des Trägers wenigstens eine drehbare und bewegliche horizontale Bürste (4) angeordnet ist, die als eine Oberbürste (4) bezeichnet wird, wobei das Portal (3) so ausgeführt ist, dass es in Längsrichtung des positionierten Fahrzeugs (8) bewegt wird, die Seitenbürsten (2) mit Einrichtungen für Quer-Bewegung an einem Querträger relativ zu der Bewegungsrichtung des Portals eingerichtet sind, das Portal (3) mit einem Querträger-Modul (9) eingerichtet ist, das einen Querträger umfasst, der sich von einem Bereich an einer ersten Stütze (5) zu einem Bereich an einer zweiten Stütze (5) erstreckt, und wobei das Querträger-Modul (9) wenigstens ein Querteil umfasst, an dem eine oder mehrere zusätzliche Seitenbürste/n (2) drehbar und in Längsrichtung des Querträgers beweglich angeordnet ist/sind, wobei die Waschanlage (1) **dadurch gekennzeichnet ist, dass** je nach Bedarf ein zusätzliches Querträger-Modul (9) an dem Portal (3) installiert oder von ihm deinstalliert werden kann.

2. Autowaschanlage (1) nach Anspruch 1, **dadurch gekennzeichnet, dass** das Querträger-Modul (9) U-förmig ist und ein Querteil sowie zwei Längsteile enthält, wobei die zwei Längsteile an Kopplungseinrichtungen an den zwei Stützen(5) der Wascheinrichtung befestigt sind.

3. Autowaschanlage (1) nach einem der Ansprüche 1 und 2, **dadurch gekennzeichnet, dass** das bewegliche Portal (3) mit einem Querträger-Modul (9) an beiden Seiten des Portals (3) ausgestattet ist.

4. Autowaschanlage (1) nach einem der Ansprüche 1 bis 3, **dadurch gekennzeichnet, dass** das Portal (3) Befestigungseinrichtungen für ein Querträger-Modul (9) sowie Kopplungseinrichtungen wenigstens für Strom und Druckluft für das Querträger-Modul (9) enthält.

## Revendications

1. Installation de lavage de voiture (1) avec une zone de lavage du type où un véhicule (8) est positionné centralement dans une zone de lavage, dans laquelle l'installation de lavage de voiture (1) inclut une machine de lavage sous la forme d'un portail mobile (3) qui inclut une première et une seconde jambe (5) et un support, dans laquelle le long de chacune des jambes (5) est agencée au moins une brosse (2) verticale tournante et mobile appelée une brosse latérale (2), et dans laquelle le long du support est agencée au moins une brosse (4) horizontale tournante et mobile appelée une brosse supérieure (4), dans laquelle le portail (3) est configuré pour être déplacé dans une direction longitudinale du véhicule (8) positionné, dans laquelle les brosses latérales (2) sont adaptées avec des moyens pour un mouvement transversal sur une barre transversale relativement à la direction de déplacement du portail, dans laquelle le portail (3) est adapté avec un module de barre transversale (9) incluant une barre transversale s'étendant depuis une zone au niveau d'une première jambe (5) jusqu'à une zone au niveau d'une seconde jambe (5), et dans laquelle le module de barre transversale (9) inclut au moins une partie transversale sur laquelle une ou plusieurs brosses latérales (2) supplémentaires sont agencées tournantes et mobiles dans une direction longitudinale de la barre transversale, l'installation de lavage de voiture (1) étant **caractérisée en ce qu'**un module de barre transversale (9) peut être installé ou désinstallé sur le portail (3) selon les besoins.

2. Installation de lavage de voiture (1) selon la revendication 1, **caractérisée en ce que** le module de barre transversale (9) est en forme de U et inclut une partie transversale et deux parties longitudinales, dans laquelle les deux parties longitudinales sont fixées sur des moyens de couplage sur les deux jambes (5) de l'installation de lavage.

3. Installation de lavage de voiture (1) selon l'une quelconque des revendications 1 et 2, **caractérisée en ce que** le portail mobile (3) est équipé d'un module de barre transversale (9) des deux côtés du portail (3).

4. Installation de lavage de voiture (1) selon l'une quelconque des revendications 1 à 3, **caractérisée en ce que** le portail (3) inclut des moyens de fixation pour un module de barre transversale (9) ainsi que des moyens de couplage au moins pour l'électricité et l'air comprimé pour le module de barre transversale (9).
